(19) Europäisches Patentamt
European Patent Office
Office européen des brevets

(11) EP 0 627 114 B1

(12) # FASCICULE DE BREVET EUROPEEN

(45) Date de publication et mention de la délivrance du brevet:
**09.06.1999 Bulletin 1999/23**

(21) Numéro de dépôt: **94902844.3**

(22) Date de dépôt: **21.12.1993**

(51) Int Cl.[6]: **G11B 5/49**, G11B 15/12, G11B 21/10

(86) Numéro de dépôt international:
**PCT/FR93/01279**

(87) Numéro de publication internationale:
**WO 94/15335 (07.07.1994 Gazette 1994/15)**

(54) **PROCEDE DE LECTURE D'UN SUPPORT D'ENREGISTREMENT ET SYSTEME APPLIQUANT CE PROCEDE**

VERFAHREN ZUM LEZEN EINES AUFZEICHNUNGSTRAGERS UND SYSTEM DAS DIESES VERFAHREN ANWENDET

METHOD OF READING A RECORDING MEDIUM AND SYSTEM USING SAID METHOD

(84) Etats contractants désignés:
**DE ES FR GB IT**

(30) Priorité: **22.12.1992 FR 9215474**

(43) Date de publication de la demande:
**07.12.1994 Bulletin 1994/49**

(73) Titulaires:
- **THOMSON-CSF**
  **75008 Paris (FR)**
- **THOMSON multimedia**
  **92648 Boulogne Cédex (FR)**

(72) Inventeurs:
- **MAURICE, François**
  **F-92402 Courbevoie Cédex (FR)**
- **SONRIER, Michel**
  **F-92402 Courbevoie Cédex (FR)**
- **HANNA, Charaf**
  **F-92402 Courbevoie Cédex (FR)**
- **COLINEAU, Joseph**
  **F-92402 Courbevoie Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**GB-A- 1 478 339** **US-A- 3 158 846**

- **PATENT ABSTRACTS OF JAPAN vol. 11, no. 153 (P-577)19 Mai 1987 & JP,A,61 287 056 (TOSHIBA CORP.) 17 Décembre 1986**
- **IBM TECHNICAL DISCLOSURE BULLETIN. vol. 7, no. 10 , Mars 1965 , ARMONK NEW YORK US page 868 R.W. CALFEE 'MAGNETIC RECORDING NARROW TRACK PLAYBACK HEAD SYSTEM'**
- **PATENT ABSTRACTS OF JAPAN vol. 8, no. 129 (P-280)(1566) 15 Juin 1984 & JP,A,59 033 618 (HITACHI SEISAKUSHO K.K.) 23 Février 1984**

EP 0 627 114 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé de lecture d'un support d'enregistrement et un système appliquant ce procédé.

L'invention s'applique notamment à la lecture d'enregistrements magnétiques ou optiques et, dans ce cadre, à la lecture d'enregistrement haute densité. Elle trouve une application préférentielle dans les systèmes d'enregistrements tels que les périphériques informatiques et tous systèmes professionnels.

Elle peut être étendue aux enregistrements sur bande optique et sur disque magnétique ou optique, dès lors que l'on veut y lire plusieurs pistes adjacentes en parallèle.

L'enregistrement haute densité sur des pistes parallèles pose un double problème à la relecture de suivi et de séparation des pistes. La faible largeur des pistes (inférieure à 20 µm) fait qu'il est difficile sur un lecteur à bande d'assurer la précision du suivi de piste sur la base du seul guidage mécanique du bord de bande.

La nécessité de garantir l'intéropérabilité des bandes et des lecteurs vient aggraver cette difficulté.

Par ailleurs, l'obtention d'un bon rapport signal à bruit en lecture nécessite de relire toute la largeur de piste, ce qui exclut l'existence d'une garde entre pistes et induit des phénomènes de diaphonie de lecture de piste à piste.

Les systèmes actuels d'enregistrement à haute densité sur bande reposent sur l'utilisation d'un tambour tournant d'analyse. Ils nécessitent la mise en oeuvre de techniques de suivi de piste et de réduction de diaphonie comme exposé ci-après.

Les têtes de lecture sont en général plus larges que les pistes qu'elles lisent, et leur entrefer présente un angle d'azimut (6-10-20°) par rapport à la normale au sens de défilement. Cet azimut est inversé d'une tête à l'autre et donc, d'une piste à la piste adjacente, de sorte qu'à la lecture, la diaphonie due aux pistes voisines est atténuée et ce d'autant plus que les fréquences sont élevées. La diaphonie ne s'exerce donc que sur la partie basse du spectre.

En vidéo analogique, on y trouve les signaux de différence de couleur, de faible résolution spatiale, et on fait en sorte que la diaphonie n'affecte (mélange) que les couleurs identiques de lignes voisines.

Lorsque l'information enregistrée est numérique, on s'arrange pour augmenter l'angle d'azimut. Par exemple 10° pour le système PCM de 8 mm ( ) et 20° pour le système audio d'enregistrement numérique (DAT). On utilise un code canal avec peu d'énergie dans les basses fréquences (par exemple code 8-10 du DAT).

La cinématique particulière des systèmes à têtes tournantes avec pistes inclinées par rapport au bord de bande a pour conséquence que le suivi de piste peut être réalisé en faisant varier la phase de rotation du tambour, la vitesse de bande étant constante. Il faut cependant pouvoir disposer d'un signal d'erreur à partir d'informations écrites sur la bande.

<u>- Systèmes analogiques</u>

En VHS, une piste de marquage utilisant une tête fixe permet d'asservir la rotation du tambour. Ce système est assez grossier et l'intéropérabilité est mauvaise (nécessité d'un ajustement manuel).

En vidéo 8 mm ou V2000, des signaux pilotes à basse fréquence sont enregistrés simultanément avec le signal vidéo. Ceux des pistes encadrant la piste lue sont captés par diaphonie résiduelle. Un déséquilibre entre pilotes droit et gauche résulte en une tension d'erreur modifiant la phase de rotation du tambour.

<u>- Systèmes numériques (DAT)</u>

Le même système est utilisé mais les pilotes ne peuvent coexister avec la modulation numérique qu'ils perturberaient trop (énergie aux basses fréquences). Ils sont donc multiplexés temporellement avec celle-ci, occupant de l'ordre de 8 % de la capacité du canal.

Dans les systèmes à têtes tournantes, l'enregistrement azimuté permet de s'affranchir de la diaphonie à haute fréquence tout en autorisant la lecture de basses fréquences écrites sur des pistes voisines afin de permettre le suivi de piste.

Ces techniques ne sont pas transposables aux systèmes à têtes fixes (non tournantes), car la constitution de celles-ci n'autorise pas l'enregistrement avec azimut.

La Demande de Brevet français n° 88 05592 décrit un exemple de tête fixe d'enregistrement magnétique.

La Demande de Brevet français n° 89 17313 décrit un exemple de tête également fixe de lecture d'enregistrement magnétique (par procédé magnéto-optique).

JP-A-61287056 divulgue dans le domaine de l'enregistrement sur disque optique une méthode et un dispositif pour éliminer la diaphonie provenant des pistes situées de part et d'autre d'une piste principale dans laquelle l'information enregistrée sur chaque piste a une fréquence caractéristique différente des autres. Le document sert de base aux préambules des revendications 1 et 8.

L'invention concerne un procédé et un système permettant la lecture d'un enregistrement tel qu'un enregistrement magnétique enregistré sur bande magnétique sous forme de pistes jointives ou quasi-jointes. Elle permet de calculer la diaphonie existant entre plusieurs pistes et de la corriger.

L'invention s'applique dans le cadre d'un système dans lequel :

- Plusieurs pistes sont écrites jointives sur un support sans azimut, grâce, par exemple, à une tête d'écriture magnétique matricielle (par exemple).

- Elles sont toutes relues simultanément grâce, par exemple, à un système magnéto-optique utilisant un CCD linéaire.

Dans le cadre de la correction de diaphonie, le système de l'invention est tel que :

- Les diaphonies issues des premières pistes voisines de chaque piste sont calculées en temps réel.
- Les diaphonies sont corrigées en tenant compte des coefficients précédemment calculés, et des valeurs, connues des voisins perturbateurs.
- une éventuelle différence entre les coefficients de diaphonie droit et gauche traduit une erreur de suivi de piste. Cette indication est utilisée comme valeur d'erreur dans une boucle électromécanique assurant le suivi de piste.

Ce système permet donc d'annuler la diaphonie issue du premier voisin et d'assurer le suivi de piste modulo une piste.

L'invention conceme donc un procédé de lecture d'un support d'enregistrement comportant plusieurs pistes d'informations enregistrées en parallèle, chaque information pouvant être de valeur positive ou négative, selon lequel on reçoit au moins des signaux d'une première piste (xj) ainsi que ceux d'une deuxième et ceux d'une troisième pistes situées de part et d'autre de la première piste, caractérisé en ce qu'il comporte les étapes suivantes :

- calcul d'un premier coefficient de diaphonie par multiplication de la valeur d'un signal de la première piste par le signe du signal de la deuxième piste ;
- calcul d'un deuxième coefficient de diaphonie par multiplication de la valeur du signal de la première piste par le signe du signal de la troisième piste ;
- filtrage du premier et deuxième coefficients de diaphonie permettant d'effectuer la moyenne de ces coefficients au cours du temps.

L'invention concerne également un système de lecture d'un support d'enregistrement comportant plusieurs pistes d'informations enregistrées en parallèle, chaque information pouvant être de valeur positive ou négative, comprenant:

- un circuit d'estimation de diaphonie recevant au moins un premier signal provenant d'une première piste, au moins un deuxième signal provenant d'une deuxième piste située d'un côté de la première piste au moins un troisième signal provenant d'une troisième piste située de l'autre côté de la première piste par rapport à la deuxième piste, caractérisé en ce que le circuit d'estimation de diaphonie calcule un premier coefficient de diaphonie en faisant le produit du premier signal par le signe du deuxième signal et un deuxième coefficient de diaphonie en faisant le produit du premier signal par le signe du troisième signal ;

et en ce qu'un circuit de correction de diaphonie reçoit directement le premier signal, le deuxième signal et le troisième et calcule un signal corrigé en diaphonie en soustrayant du premier signal le produit du premier coefficient de diaphonie par le deuxième signal ainsi que le produit du deuxième coefficient de diaphonie par le troisième signal.

Les différents objets et caractéristiques de l'invention apparaîtront plus clairement dans la description qui va suivre et dans les figures annexées qui représentent :

- la figure 1, un système d'enregistrement-lecture de bande magnétique dans lequel l'enregistrement se fait avec une tête matricielle et la lecture avec un système magnétooptique ;
- la figure 2, un système de suivi de piste ;
- les figures 3a à 3e, un exemple de réalisation du système de l'invention ;
- les figures 4a, 4b, une variante de réalisation du système de l'invention ;
- les figures 5 et 6, des moyens de correction de grandissement du système de lecture optique du support d'enregistrement.

En se reportant à la figure 1, on va tout d'abord décrire un système d'enregistrement lecture auquel est applicable l'invention.

Ce système comporte un support d'enregistrement tel qu'une bande magnétique BD. Une tête d'enregistrement matricielle MTI comporte une matrice de têtes élémentaires MT2 commandée par des conducteurs de sélection de lignes MT3 et des conducteurs de sélection de données MT4. Cette tête permet d'enregistrer sur la bande BD différentes pistes d'informations BD1, BD2, ... BDn correspondant chacune à une tête élémentaire de la tête matricielle MT1. Cette tête d'enregistrement est telle par exemple que celle de la Demande de Brevet français n° 88 05592.

Sur la partie droite de la figure, on a représenté une tête de lecture magnétooptique TL telle que celle de la Demande de Brevet français n° 89 17313.

Cette tête TL comporte un transducteur magnétooptique TL1 (à effet Kerr par exemple) disposé parallèlement au plan de la bande magnétique et dont la grande longueur est transverse à la longueur de la bande. Une source lumineuse TL2 éclaire, par un faisceau de lumière polarisée et à travers un système de focalisation TL3, le transducteur TL1 de telle façon que le faisceau lumineux soit focalisé sensiblement selon une ligne sur une face du transducteur TL1 à proximité de la bande magnétique BD. Le faisceau réfléchi par le transducteur TL1 voit sa polarisation modifiée en fonction du champ magnétique sur la bande. Le faisceau réfléchi est transmis par un système de focalisation TL4 et un système de suivi de piste TL5 à un détecteur optoélectronique TL6 comportant par exemple un dispositif à transfert de charge CCD.

Le détecteur TL6 comporte au moins autant d'éléments détecteurs qu'il y a de pistes sur la bande.

Le transducteur TL1 réfléchit vers le détecteur TL6 un faisceau constitué en réalité d'un ensemble de faisceaux de lecture de pistes chacun ayant eu sa polarisation influencé par une piste de la bande magnétique. L'ensemble de ces faisceaux de lecture est reçu par le détecteur TL6 qui permet ainsi de détecter les informations lues sur chaque piste de la bande BD.

Le transducteur magnéto-optique n'est pas gravé et offre une structure de lecture continue, ce qui peut contribuer à la diaphonie de lecture. Il reste fixe et c'est le système de suivi de piste TL5 qui permet, en défléchissant le faisceau, d'assurer le suivi de piste dynamique.

On pourrait aussi envisager un déplacement mécanique direct du CCD le long de son axe.

Le système optique peut être conçu de façon à ce que chaque piste lue soit analysée par une et une seule photodiode.

A noter qu'il est avantageux de ne pas déplacer l'élément mécanique en contact avec la bande (le transducteur).

Le système de suivi de piste TL5 peut être réalisé comme cela est représenté en figure 2. Il comporte une lame de verre à face parallèle TL7 disposée sensiblement parallèlement au détecteur TL6 et tournant autour d'un axe perpendiculaire à la plus grande longueur du transducteur TL1. La rotation est contrôlée par un électro-aimant TL8 et un noyau plongeur TL9 solidaire de la lame TL7. L'électro-aimant reçoit des informations électriques de suivi de piste et permet d'orienter la lame de façon à dévier convenablement le faisceau provenant du transducteur TL1 vers le détecteur TL6 et à affecter à chaque photodiode du détecteur TL6 un faisceau de lecture de piste transmis par le transducteur TL1.

La commande de la lame TL7 peut également être assurée par tout dispositif tel qu'un dispositif piézoélectrique.

Le suivi de piste pourrait également être assuré en déplaçant les uns par rapport aux autres le détecteur TL6, l'optique TL4, le transducteur TL1.

En se reportant à la figure 3a, on va maintenant décrire un système simplifié de correction de diaphonie selon l'invention. Selon le système de lecture de la figure 1, la tête de lecture permet de connaître simultanément les échantillons de toutes les pistes (contrairement aux systèmes à têtes tournantes où la précision d'un passage de tête au suivant est insuffisante). Selon cet exemple simplifié, on supposera que les échantillons d'informations provenant de pistes adjacentes sont traités simultanément.

On considérera les informations provenant des pistes de rang j-1, j et j+1 pour connaître la diaphonie que subit la piste j en raison des pistes j-1 et j+1.

Les différentes informations lues sur les pistes du support d'enregistrement sont reçues par un circuit de contrôle d'amplitude 1 dont le rôle sera indiqué ultérieurement. Les différents signaux xj-1, xj, xj+1 sont transmis à un circuit d'estimation de diaphonie 2 et un circuit de correction de diaphonie 5.

Le circuit d'estimation de diaphonie 2 estime la diaphonie qui peut exister de la piste j-1 sur la piste j et de la piste j+1 sur la piste j. L'estimation d'un coefficient de diaphonie C'jg (diaphonie de la piste j-1 sur la piste j) se fait en effectuant le produit de la valeur du signal xj par l'unité affectée du signe du signal xj-1. Plus simplement, dans ce qui suit, on parlera de produit de la valeur du signal xj par le signe du signal xj-1. De même l'estimation du coefficient de diaphonie C'jd (diaphonie de j+1 sur j) se fait en multipliant la valeur du signal xj par le signe du signal xj+1.

La figure 3b donne un exemple de circuit d'estimation de diaphonie dans lequel les signaux xj-1, xj, xj+1 arrivent en série. Des circuits à retard 20, 21 recalent en phase ces signaux et un circuit 22 par exemple de type mémoire ROM calcule les coefficients de diaphonie C'jg et C'jd.

Chaque coefficient de diaphonie C'jg et C'jd ainsi calculé est transmis à un filtre 3g, 3d ou "filtre de lissage" qui permet d'en effectuer la moyenne Cig ou Cjd au cours du temps. Pour cela, chaque coefficient est combiné au précédent coefficient de diaphonie calculé précédemment pour la même piste.

La figure 3c donne un exemple de filtre de lissage. Ce filtre est expliqué, par exemple, en relation avec le coefficient de diaphonie C'jg. Un circuit multiplicateur 30 multiplie le coefficient C'jg reçu par un coefficient de pondération k, ce coefficient k étant inférieur à 1. Le résultat est transmis à un additionneur 31 qui reçoit sur une deuxième entrée le coefficient de diaphonie calculé précédemment pour la même piste, qui avait été gardé dans la mémoire 32 et qui est multiplié par le coefficient 1-k (circuit multiplicateur 33). On obtient ainsi en sortie un coefficient de diaphonie Cjg qui est filtré.

La figure 3d donne la constitution, à titre d'exemple, du circuit mémoire 32. Ce circuit mémoire comporte n circuits mémoire 32.1 à 32.n. Le nombre n est le nombre de pistes du support d'enregistrement. Ainsi à chaque traitement d'une piste les coefficients de diaphonie calculés précédemment pour les autres pistes sont décalés d'un pas mémoire de telle façon que le coefficient Cjg d'une piste calculé à instant donné entre dans la mémoire (côté droit) et qu'il soit présenté aux circuits 33 et 31, n pas mémoires suivant, quand le circuit 31 recevra le coefficient C'jg suivant de la même piste.

Les coefficients de diaphonie Cjg et Cjd ainsi filtrés sont transmis au circuit de correction de diaphonie 5. Celui-ci reçoit également les signaux xj-1, xj et xj+1 et effectue la correction de diaphonie du signal xj en fai-

sant l'opération suivante :

$$xj - (Cjg.xj\text{-}1 + Cjd.xj\text{+}1)$$

La figure 3e représente un exemple de réalisation du circuit de correction de diaphonie 5. Ce circuit comporte deux circuits à retard 50, 51 permettant de remettre en phase les signaux xj-1, xj, xj+1 qui sont supposés reçus en série. Un circuit 52 de type ROM reçoit les coefficients de diaphonie Cjg et Cjd ainsi que les signaux xj-1 et xj+1, et fournit un échange Cjg.xj-1+Cjd. xj+1. Ce résultat est transmis au circuit de soustraction 53 qui effectue la différence entre ce résultat et la valeur du signal xj. On obtient ainsi le signal corrigé en diaphonie x'j.

Le circuit de la figure 3a permet ainsi de corriger en diaphonie les signaux xj.

Ce circuit permet également de calculer un signal de suivi de piste pour commander le dispositif de suivi de piste TL5 décrit précédemment ou les positions respectives du détecteur TL6, de l'optique TL4 et du transducteur TL1. Cela est réalisé à l'aide d'un circuit de soustraction 6 connecté aux sorties des filtres 3g et 3d, et qui effectue la différence entre les coefficients de diaphonie. Pour éviter que toute variation brutale des coefficients de diaphonie ait un effet immédiat sur le dispositif de suivi de piste, la différence Cjg-Cjd est intégrée sur les n pistes que possède le support d'enregistrement. On obtient un signal de suivi de piste qui peut être moyenné sur l'ensemble des pistes pour donner un résultat insensible aux phénomènes affectant une piste particulière.

Les différents signaux (xj) admis dans le circuit de la figure 3a ont en principe pour valeur -1 ou +1. Cela n'est pas le cas en réalité. Dans ces conditions, toute différence notable peut fausser le fonctionnement du circuit. C'est pourquoi le circuit de contrôle d'amplitude mentionné précédemment permet de ramener les différents signaux (xj) à une valeur comparable en valeur absolue pour toutes les pistes.

Les figures 4a, 4b représentent une variante préférentielle de réalisation selon l'invention.

Le circuit de la figure 4a comporte un circuit de correction de diaphonie 5 qui reçoit les signaux xj-1, xj, xj+1.

Le circuit d'estimation de diaphonie 2 est connecté en sortie du circuit de correction de diaphonie 5. Associé à un filtre intégrateur, il effectue donc un calcul des coefficients de diaphonie a posteriori. En fait, puisque le calcul de diaphonie est fait en sortie du circuit de correction de diaphonie 5, le circuit d'estimation de diaphonie effectue une estimation de diaphonie résiduelle d'un signal supposé déjà corrigé en diaphonie. Ce circuit 2 fonctionne de la même manière que celui de la figure 3a.

Les coefficients de diaphonie résiduelles estimés ejg et ejd sont transmis à des filtres intégrateurs 4g et 4d. Ces filtres intègrent continuement les coefficients de diaphonie.

L'opération réalisée par les filtres intégrateurs est la suivante :

$$Cjg_t = Cjg_{t\text{-}1} + k'e_{jg}$$

c'est-à-dire que, à l'instant t, la nouvelle valeur estimée du coefficient de diaphonie est égale à la valeur à l'instant t-1 corrigé d'une fraction k' de l'erreur résiduelle $e_{jg}$.

Il s'agit d'un processus adaptatif suivant l'algorithme du gradient.

La figure 4b représente un exemple de réalisation de ces filtres. Un circuit 40 pondère à l'aide d'un coefficient k' (inférieur à 1) le coefficient de diaphonie résiduelle (ejg). Le coefficient pondéré est transmis à une entrée d'un circuit d'addition 41 dont la sortie est rebouclée sur une autre entrée par un circuit mémoire 42. Ce circuit mémoire 42 est constitué, par exemple, comme celui représenté en figure 3d. On voit donc que le coefficient de diaphonie résiduelle ejg, pondéré par le coefficient k' est additionné à la valeur du coefficient de diaphonie calculé précédemment pour la même piste.

Les circuits 4g et 4d transmettent alors des coefficients de diaphonie Cjg et Cjd au circuit de correction de diaphonie 5 qui est constitué de la même manière que celui des figures 3a et 3e et qui fonctionne de la même façon.

Le circuit de la figure 4a fournit donc des signaux corrigés en diaphonie x'j.

Comme le circuit de la figure 3a, celui de la figure 4a possède des circuits 6 et 7 qui, à partir des coefficients de diaphonie Cjg et Cjd, fournissent un signal de suivi de piste.

On rappelle que le traitement des signaux de pistes qui vient d'être décrit peut être réalisé séquentiellement pour les différentes pistes.

Par ailleurs, selon un autre aspect de l'invention, si on constate que la différence des coefficients de diaphonie droite et gauche varie de façon quasiment régulière pour les différentes pistes selon toute la largeur ou au moins sur une partie de la largeur du support d'enregistrement on doit considérer que le grandissement de l'optique de lecture est mal réglé.

Selon l'invention, on prévoit donc de calculer la variation moyenne de la différence des coefficients de diaphonie droite et gauche sur n pistes. Ce qui revient à calculer la pente de la courbe de variation de diaphonie telle que représentée en figure 5.

Le sens de la variation de la pente donne le signe de l'erreur de grandissement.

Le signal résultant de ce traitement est utilisé pour modifier le grandissement de l'objectif d'imagerie TL4 (voir figure 1).

Ce réglage est fait par des moyens non représentés en déplaçant soit l'optique TL4, soit les détecteurs TL6.

Selon une version compacte du système de lecture représentée en figure 6, le système optique de transmission entre le dispositif à effet Kerr TL1 et les détecteurs TL6 comprend des miroirs sphériques SP1 et SP2. Pour faire le réglage ci-dessus, des moyens non représentés déplaceront soit le miroir SP1, soit le miroir SP2 selon les flèches indiquées.

## Revendications

1. Procédé de lecture d'un support d'enregistrement comportant plusieurs pistes d'informations enregistrées en parallèle, chaque information pouvant être de valeur positive ou négative, selon lequel on reçoit au moins des signaux d'une première piste (xj) ainsi que ceux d'une deuxième (xj-1) et ceux d'une troisième (xj+1) pistes situées de part et d'autre de la première piste, caractérisé en ce qu'il comporte les étapes suivantes :

   - calcul d'un premier coefficient de diaphonie par multiplication de la valeur d'un signal de la première piste par le signe du signal de la deuxième piste ;
   - calcul d'un deuxième coefficient de diaphonie par multiplication de la valeur du signal de la première piste par le signe du signal de la troisième piste ;
   - filtrage du premier et deuxième coefficients de diaphonie permettant d'effectuer la moyenne de ces coefficients au cours du temps.

2. Procédé selon la revendication 1, caractérisé en ce qu'il comporte une étape établissant une différence entre les deux coefficients de diaphonie de façon à obtenir un signal de correction de suivi de piste.

3. Procédé selon la revendication 2, caractérisé en ce que la différence est intégrée sur un nombre d'opérations correspondant sensiblement au nombre de pistes du support d'enregistrement.

4. Procédé selon la revendication 1, caractérisé en ce qu'il comporte une étape de correction de diaphonie consistant à soustraire d'un signal (xj) de la première piste (j), le produit du premier coefficient de diaphonie filtré (Cjg) par la valeur du signal de la deuxième piste (xj-1) et le produit du deuxième coefficient de diaphonie filtré (Cjd) par la valeur du signal de la troisième piste (xj+1).

5. Procédé selon la revendication 4, caractérisé en ce que le filtrage se fait par pondération par un coefficient k du coefficient de diaphonie calculé et qu'on additionne ce coefficient pondéré à un coefficient de diaphonie estimé antérieurement pour la même piste et pondéré par un coefficient 1-k.

6. Procédé selon la revendication 4, caractérisé en ce qu'il comporte après réception des signaux une étape préalable de correction d'amplitude des signaux de façon à normaliser leurs amplitudes.

7. Procédé selon la revendication 4, caractérisé en ce que les étapes de calcul du premier et du deuxième coefficients de diaphonie se font à partir des signaux corrigés en diaphonie de façon à calculer des coefficients de diaphonies résiduelles (ejg, ejd), le filtrage consistant à actualiser à chaque instant la valeur des coefficients de diaphonie Cjg, Cjd par une fraction k' du coefficient de diaphonie résiduelle ejg, ejd.

8. Système de lecture d'un support d'enregistrement comportant plusieurs pistes d'informations enregistrées en parallèle, chaque information pouvant être de valeur positive ou négative, comprenant :

   - un circuit d'estimation de diaphonie (2) recevant au moins un premier signal (xj) provenant d'une première piste (j), au moins un deuxième signal (xj-1) provenant d'une deuxième piste (j-1) située d'un côté de la première piste (j), au moins un troisième signal (xj+1) provenant d'une troisième piste (j+1) située de l'autre côté de la première piste par rapport à la deuxième piste, caractérisé en ce que le circuit d'estimation de diaphonie calcule un premier coefficient de diaphonie (Cjg) en faisant le produit du premier signal par le signe du deuxième signal et un deuxième coefficient de diaphonie en faisant le produit du premier signal par le signe du troisième signal ;

   et en ce qu'un circuit de correction de diaphonie (5) reçoit directement le premier signal, le deuxième signal et le troisième et calcule un signal corrigé en diaphonie en soustrayant du premier signal le produit du premier coefficient de diaphonie par le deuxième signal ainsi que le produit du deuxième coefficient de diaphonie par le troisième signal.

9. Système selon la revendication 8, caractérisé en ce qu'il comporte un circuit de correction de signaux en amplitude recevant les signaux du support d'enregistrement et les transmettant d'une part au circuit d'estimation de diaphonie et d'autre part au circuit de correction de diaphonie.

10. Système selon la revendication 8, caractérisé en ce qu'il comporte un circuit de soustraction connecté au circuit d'estimation de diaphonie, recevant les coefficients de diaphonie, en calculant leur différence et fournissant un signal de correction de suivi de piste.

**11.** Système selon la revendication 8, caractérisé en ce qu'il comporte entre le circuit d'estimation de diaphonie (2) et le circuit de correction de diaphonie (5) un circuit de filtrage (3g, 3d) par coefficient de diaphonie ; comportant un circuit de pondération (30) pondérant à l'aide d'un premier coefficient k (k < 1) un coefficient de diaphonie et fournissant ce coefficient ainsi pondéré à une première entrée d'un circuit d'addition (31) dont la sortie est rebouclée sur une deuxième entrée, par un circuit mémoire (32) fournissant un coefficient de diaphonie calculée antérieurement pour la méme piste et par un deuxième circuit de pondération pondérant à l'aide d'un deuxième coefficient de pondération (1-k) qui est le complément à 1 du premier coefficient de pondération.

**12.** Système selon la revendication 8, caractérisé en ce que le circuit d'estimation de diaphonie (2) est connecté à une sortie du circuit de correction de diaphonie (5) et reçoit donc les signaux (xj-1, xj, xj+1) après que ceux-ci aient été traités par le circuit de correction de diaphonie.

**13.** Système selon la revendication 11, caractérisé en ce qu'il comporte entre le circuit d'estimation de diaphonie (2) et le circuit de correction de diaphonie (5), un circuit de filtrage (4g, 4d) par coefficient de diaphonie ; comprenant un premier circuit de pondération (40) recevant un signal de diaphonie et le pondérant à l'aide d'un coefficient de pondération k', un circuit d'addition (41) recevant sur une première entrée ce signal pondéré et possédant sa sortie rebouclée sur une deuxième entrée par un circuit en mémoire (42) appliquant sur cette deuxième entrée, un coefficient de diaphonie calculé antérieurement pour la méme piste.

**14.** Système selon la revendication 8, caractérisé en ce qu'il comprend :

- un support d'enregistrement (BD) ;
- des moyens optiques (TL2) pour transmettre un faisceau optique au support d'enregistrement qui retransmet ce faisceau ;
- des moyens de détection optique pour recevoir le faisceau retransmis par le support d'enregistrement ;
- des moyens de modification du grandissement du système optique ;
- un circuit calculant la variation moyenne de la différence des coefficients de diaphonie sur un ensemble de pistes et commandant, en fonction de cette différence, les moyens de modification du grandissement.

**Patentansprüche**

**1.** Verfahren zum Lesen eines Aufzeichnungsträgers, der mehrere parallel beschriebene Informationsspuren besitzt, wobei jede Information einen positiven oder negativen Wert haben kann und man mindestens Signale (xj) von einer ersten Spur sowie Signale (xj-1) von einer zweiten Spur und Signale (xj+1) von einer dritten Spur empfängt, die zu beiden Seiten der ersten Spur liegen, dadurch gekennzeichnet, daß es folgende Schritte aufweist:

- Berechnung eines ersten Diaphonie-Koeffizienten durch Multiplizierung des Werts des Signals der ersten Spur mit dem Vorzeichen des Signals der zweiten Spur,
- Berechnung eines zweiten Diaphonie-Koeffizienten durch Multiplizierung des Werts des Signals der ersten Spur mit dem Vorzeichen des Signals der dritten Spur,
- Filterung des ersten und des zweiten Diaphonie-Koeffizienten, um den zeitlichen Mittelwert dieser Koeffizienten zu bilden.

**2.** Verfahren nach Anspruch 1, dadurch gekennzeichnet, daß es einen Verfahrensschritt aufweist, bei dem eine Differenz zwischen den beiden Diaphonie-Koeffizienten gebildet wird, um eine Signal zur Korrektur der Spurverfolgung zu erhalten.

**3.** Verfahren nach Anspruch 2, dadurch gekennzeichnet, daß die Differenz über eine Anzahl von Operationen integriert wird, die im wesentlichen der Anzahl von Spuren des Aufzeichnungsträgers entspricht.

**4.** Verfahren nach Anspruch 1, dadurch gekennzeichnet, daß es einen Verfahrensschritt der Korrektur der Diaphonie enthält, bei dem von einem Signal (xj) der ersten Spur (j) das Produkt des ersten gefilterten Diaphonie-Koeffizienten (Cjg) mit dem Wert des Signals (xj-1) der zweiten Spur und das Produkt des zweiten gefilterten Diaphonie-Koeffizienten (Cjd) mit dem Wert des Signals (xj+1) der dritten Spur abgezogen wird.

**5.** Verfahren nach Anspruch 4, dadurch gekennzeichnet, daß die Filterung durch Gewichtung des berechneten Diaphonie-Koeffizienten mit einem Koeffizienten k erfolgt und daß dieser gewichtete Koeffizient zu einem vorher für die gleiche Spur geschätzten und mit einem Koeffizienten 1-k gewichteten Diaphonie-Koeffizienten hinzuaddiert wird.

**6.** Verfahren nach Anspruch 4, dadurch gekennzeichnet, daß nach dem Empfang der Signale zuerst eine Amplitudenkorrektur der Signale erfolgt, um ihre Amplituden zu normieren.

**7.** Verfahren nach Anspruch 4, dadurch gekennzeichnet, daß die Verfahrensschritte der Berechnung des ersten und des zweiten Diaphoniekoeffizienten ausgehend von den hinsichtlich der Diaphonie korrigierten Signalen so erfolgen, daß Restdiaphonie-Koeffizienten (ejg, ejd) berechnet werden, wobei die Filterung darin besteht, in jedem Augenblick den Wert der Diaphonie-Koeffizienten (Cjg und Cjd) um einen Bruchteil (k') des Restdiaphonie-Koeffizienten (ejg, ejd) zu aktualisieren.

**8.** System zum Lesen eines Aufzeichnungsträgers, der mehrere parallel beschriebene Informationsspuren besitzt, wobei jede Information einen positiven oder negativen Wert haben kann, mit einer Schaltung (2) zur Abschätzung der Diaphonie, die mindesten ein erstes von einer ersten Spur (j) kommendes Signal (xj), mindestens ein zweites, von einer zweiten, auf der einen Seite neben der ersten Spur (j) liegenden zweiten Spur (j-1) kommendes Signal (xj-1) und mindestens ein drittes, von einer dritten auf der anderen Seite der ersten Spur bezüglich der zweiten Spur liegenden dritten Spur (j+1) kommendes Signal (xj+1) empfängt, dadurch gekennzeichnet, daß die Schaltung zur Abschätzung der Diaphonie einen ersten Diaphonie-Koeffizienten (Cjg) berechnet, indem sie das Produkt aus dem ersten Signal und dem Vorzeichen des zweiten Signals bildet, und einen zweiten Diaphonie-Koeffizienten (Cjd) berechnet, indem sie das Produkt aus dem ersten Signal und dem Vorzeichen des dritten Signals bildet, und daß eine Schaltung (5) zur Korrektur der Diaphonie unmittelbar das erste, das zweite und das dritte Signal empfängt und ein hinsichtlich der Diaphonie korrigiertes Signal berechnet, indem vom ersten Signal das Produkt aus dem ersten Diaphonie-Koeffizienten mit dem zweiten Signal sowie das Produkt aus dem zweiten Diaphonie-Koeffizienten mit dem dritten Signal abgezogen wird.

**9.** System nach Anspruch 8, dadurch gekennzeichnet, daß es eine Korrekturschaltung für Signale hinsichtlich der Amplitude aufweist, die die Signale vom Aufzeichnungsträger empfängt und sie einerseits an die Schaltung zur Abschätzung der Diaphonie und andrerseits an die Schaltung zur Korrektur der Diaphonie übermittelt.

**10.** System nach Anspruch 8, dadurch gekennzeichnet, daß es eine Subtraktionsschaltung aufweist, die an die Schaltung zur Abschätzung der Diaphonie angeschlossen ist, die Diaphonie-Koeffizienten empfängt, ihre Differenz berechnet und ein Signal zur Korrektur der Spurverfolgung liefert.

**11.** System nach Anspruch 8, dadurch gekennzeichnet, daß es zwischen der Schaltung (2) zur Abschätzung der Diaphonie und der Schaltung (5) zur Korrektur der Diaphonie eine Schaltung (3g, 3d) zur Filterung für jeden Diaphonie-Koeffizienten aufweist, die eine Wichtungsschaltung (30) besitzt, welche einen Diaphonie-Koeffizienten mit einem ersten Koeffizienten (k) kleiner als 1 gewichtet und diesen so gewichteten Koeffizienten an den ersten Eingang einer Addierschaltung (31) liefert, deren Ausgang an einen zweiten Eingang über eine Speicherschaltung (32), die einen vorher für die selbe Spur berechneten Diaphonie-Koeffizienten liefert, und über eine zweite Wichtungsschaltung zurückgeschleift ist, die mit einem zweiten Wichtungskoeffizienten (1-k) gewichtet, der das Komplement des ersten Wichtungskoeffizienten zum Wert 1 ist.

**12.** System nach Anspruch 8, dadurch gekennzeichnet, daß die Schaltung (2) zur Abschätzung der Diaphonie an einen Ausgang der Schaltung (5) zur Korrektur der Diaphonie angeschlossen ist und somit die Signale (x j-1, x j, x j+1) empfängt, nachdem diese durch die Schaltung zur Korrektur der Diaphonie bearbeitet wurden.

**13.** System nach Anspruch 11, dadurch gekennzeichnet, daß es zwischen der Schaltung (2) zur Abschätzung der Diaphonie und der Schaltung (5) zur Korrektur der Diaphonie eine Filterschaltung (4g, 4d) für jeden Diaphonie-Koeffizienten besitzt, die eine erste Wichtungsschaltung (40), die ein Diaphoniesignal empfängt und es mit einem Wichtungskoeffizienten (k') gewichtet, eine Additionsschaltung (41), die an einem ersten Eingang dieses gewichtete Signal empfängt und deren Ausgang an einen zweiten Eingang über eine Speicherschaltung (42) rückgeschleift ist und an den zweiten Eingang einen vorher für die gleiche Spur berechneten Diaphonie-Koeffizienten anlegt.

**14.** System nach Anspruch 8, dadurch gekennzeichnet, daß es aufweist:

- einen Aufzeichnungsträger (BD),
- optische Mittel (TL2) zur Übertragung eines Lichtstrahls an den Aufzeichnungsträger, der diesen Strahl weiterüberträgt,
- Mittel zur optischer Erfassung des vom Aufzeichnungsträger weiterübertragenen Strahls,
- Mittel zur Veränderung der Vergrößerung des optischen Systems,
- eine Schaltung, die die mittlere Veränderung der Differenz der Diaphonie-Koeffizienten über eine Gruppe von Spuren berechnet und abhängig von dieser Differenz die Mittel zur Veränderung der Vergrößerung steuert.

**Claims**

1. Method of reading a recording medium comprising several information tracks recorded in parallel, each item of information being of positive or negative value, according to which there are received at least signals from a first track (xj) as well as those from a second (xj-1) and those from a third (xj+1) track situated on either side of the first track, characterized in that it comprises the following steps:

   - calculating a first crosstalk coefficient by multiplying the value of a signal from the first track by the sign of the signal from the second track;
   - calculating a second crosstalk coefficient by multiplying the value of the signal from the first track by the sign of the signal from the third track;
   - filtering the first and second crosstalk coefficients making it possible to average these coefficients over time.

2. Method according to Claim 1, characterized in that it comprises a step establishing a difference between the two crosstalk coefficients so as to obtain a track following correction signal.

3. Method according to Claim 2, characterized in that the difference is integrated over a number of operations corresponding substantially to the number of tracks of the recording medium.

4. Method according to Claim 1, characterized in that it comprises a crosstalk correction step consisting in subtracting the product of the first filtered crosstalk coefficient (Cjg) times the value of the signal from the second track (xj-1) and the product of the second filtered crosstalk coefficient (Cjd) times the value of the signal from the third track (xj+1) from a signal (xj) from the first track (j).

5. Method according to Claim 4, characterized in that the filtering is carried out by weighting by a coefficient k the calculated crosstalk coefficient and in that this weighted coefficient is added to a crosstalk coefficient estimated previously for the same track and weighted by a coefficient 1-k.

6. Method according to Claim 4, characterized in that it comprises after receiving the signals a prior step of correcting the amplitude of the signals so as to normalize their amplitudes.

7. Method according to Claim 4, characterized in that the steps of calculating the first and second crosstalk coefficients are carried out on the basis of the signals corrected for crosstalk in such a way as to calculate residual crosstalk coefficients (ejg, ejd), the filtering consisting in updating the value of the crosstalk coefficients Cjg, Cjd at each instant by a fraction k' of the residual crosstalk coefficient ejg, ejd.

8. System for reading a recording medium comprising several information tracks recorded in parallel, each item of information being of positive or negative value, comprising:

   - a crosstalk estimation circuit (2) receiving at least one first signal (xj) originating from a first track (j), at least one second signal (xj-1) originating from a second track (j-1) situated on one side of the first track (j), at least one third signal (xj+1) originating from a third track (j+1) situated on the other side of the first track with respect to the second track, characterized in that the crosstalk estimation circuit calculates a first crosstalk coefficient (Cjg) by forming the product of the first signal times the sign of the second signal and a second crosstalk coefficient by forming the product of the first signal times the sign of the third signal;

   and in that a crosstalk correction circuit (5) receives the first signal, the second signal and the third directly and calculates a signal corrected for crosstalk by subtracting the product of the first crosstalk coefficient times the second signal as well as the product of the second crosstalk coefficient times the third signal from the first signal.

9. System according to Claim 8, characterized in that it comprises a circuit for correcting signal amplitudes which receives the signals from the recording medium and transmits them on the one hand to the crosstalk estimation circuit and on the other hand to the crosstalk correction circuit.

10. System according to Claim 8, characterized in that it comprises a subtraction circuit connected to the crosstalk estimation circuit, which receives the crosstalk coefficients, while calculating their difference and delivering a track following correction signal.

11. System according to Claim 8, characterized in that between the crosstalk estimation circuit (2) and the crosstalk correction circuit (5) it comprises a circuit for filtering (3g, 3d) based on crosstalk coefficient; comprising a weighting circuit (30) which with the aid of a first coefficient k ($k < 1$) weights a crosstalk coefficient and delivers this coefficient thus weighted to a first input of an addition circuit (31) whose output is looped back to a second input, via a memory circuit (32) delivering a crosstalk coefficient calculated previously for the same track and via a second weighting circuit which weights with the aid of a second weighting coefficient (1-k) which is the 1's complement of the first weighting coefficient.

**12.** System according to Claim 8, characterized in that the crosstalk estimation circuit (2) is connected to an output of the crosstalk correction circuit (5) and therefore receives the signals (xj-1, xj, xj+1) after they have been processed by the crosstalk correction circuit.

**13.** System according to Claim 11, characterized in that between the crosstalk estimation circuit (2) and the crosstalk correction circuit (5) it comprises a circuit for filtering (4g, 4d) based on crosstalk coefficient; comprising a first weighting circuit (40) which receives a crosstalk signal and weights it with the aid of a weighting coefficient k, an addition circuit (41) which receives this weighted signal on a first input and has its output looped back to a second input via a memory circuit (42) which applies a crosstalk coefficient calculated previously for the same track to this second input.

**14.** System according to Claim 8, characterized in that it comprises:

- a recording medium (BD);
- optical means (TL2) for transmitting an optical beam to the recording medium which retransmits this beam;
- means of optical detection for receiving the beam retransmitted by the recording medium;
- means for modifying the magnification of the optical system;
- a circuit calculating the mean variation in the difference of the crosstalk coefficients over a set of tracks and controlling the means for modifying the magnification as a function of this difference.

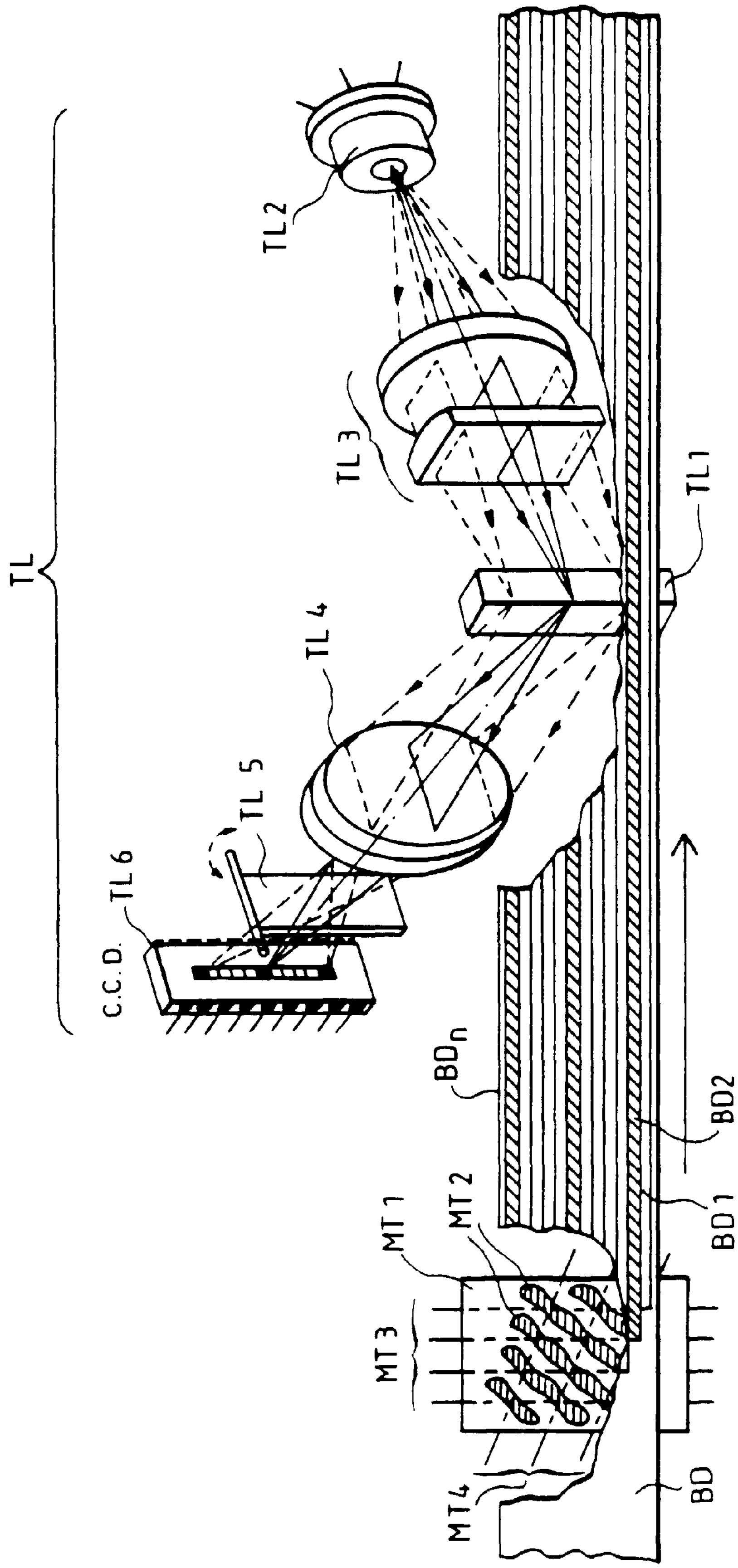


FIG.1

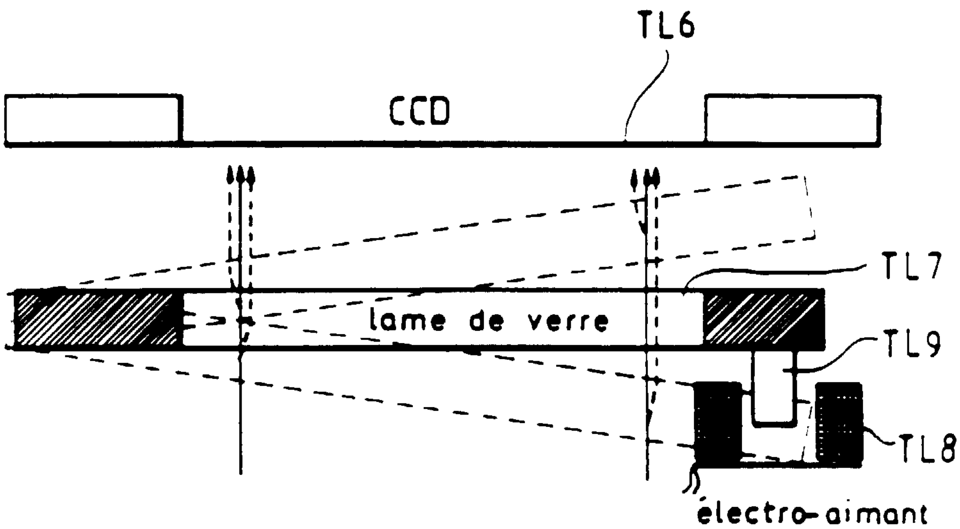


FIG.2

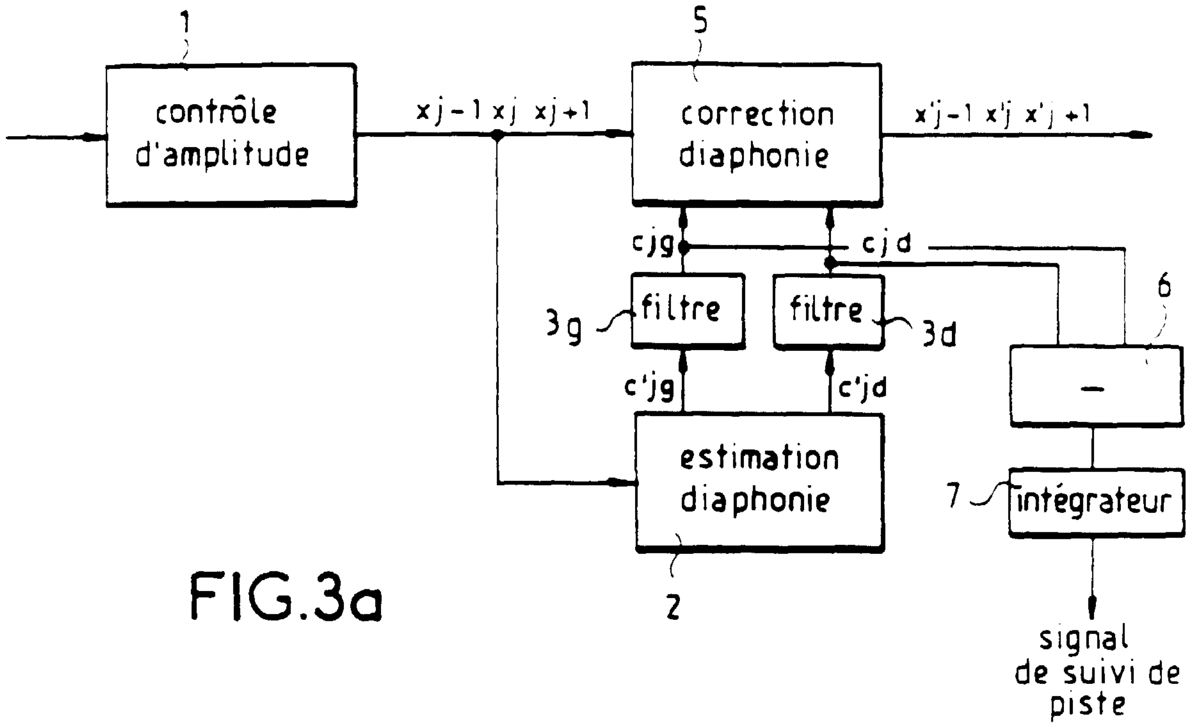


FIG.3a

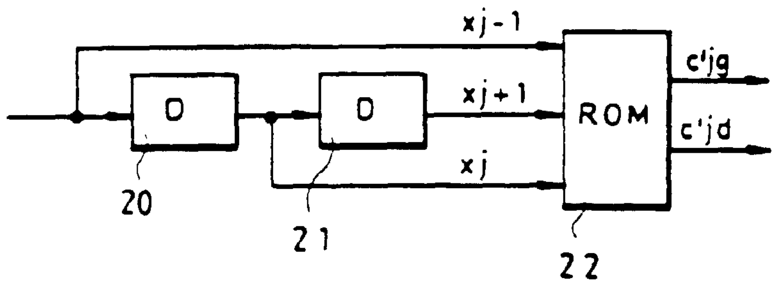


FIG.3b

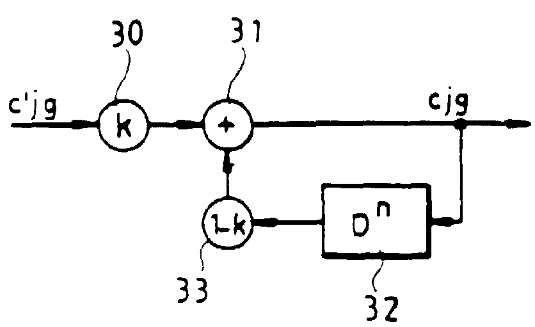


FIG.3c

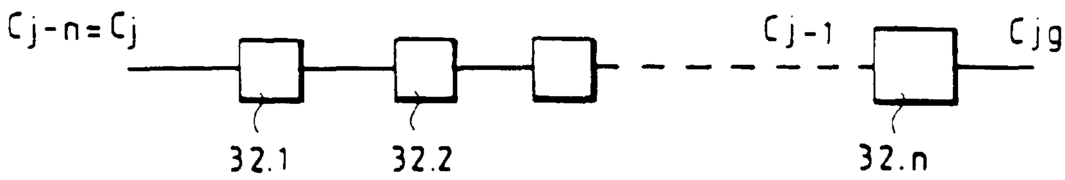
Cj-n=Cj
Cj-1
Cjg
32.1
32.2
32.n

FIG.3d

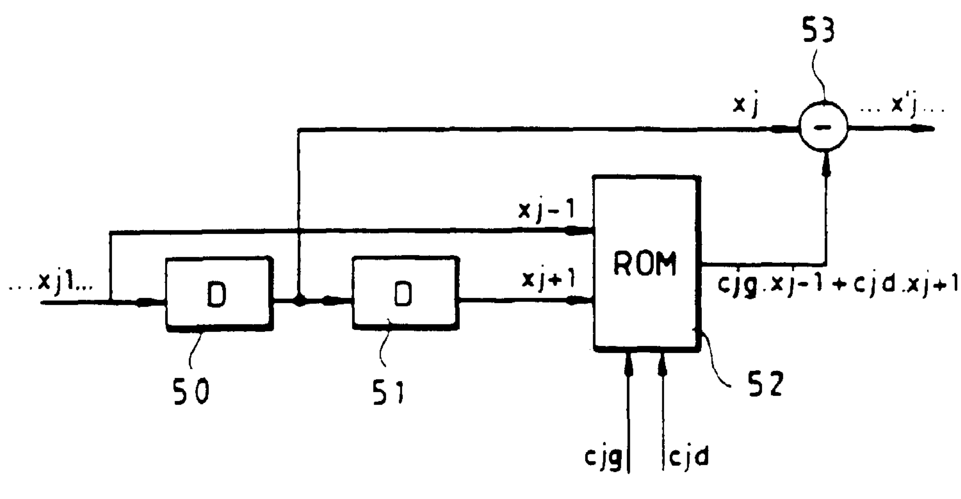
53
xj
...x'j...
xj-1
ROM
...xj1...
D
D
xj+1
cjg.xj-1+cjd.xj+1
50
51
52
cjg
cjd

FIG.3e

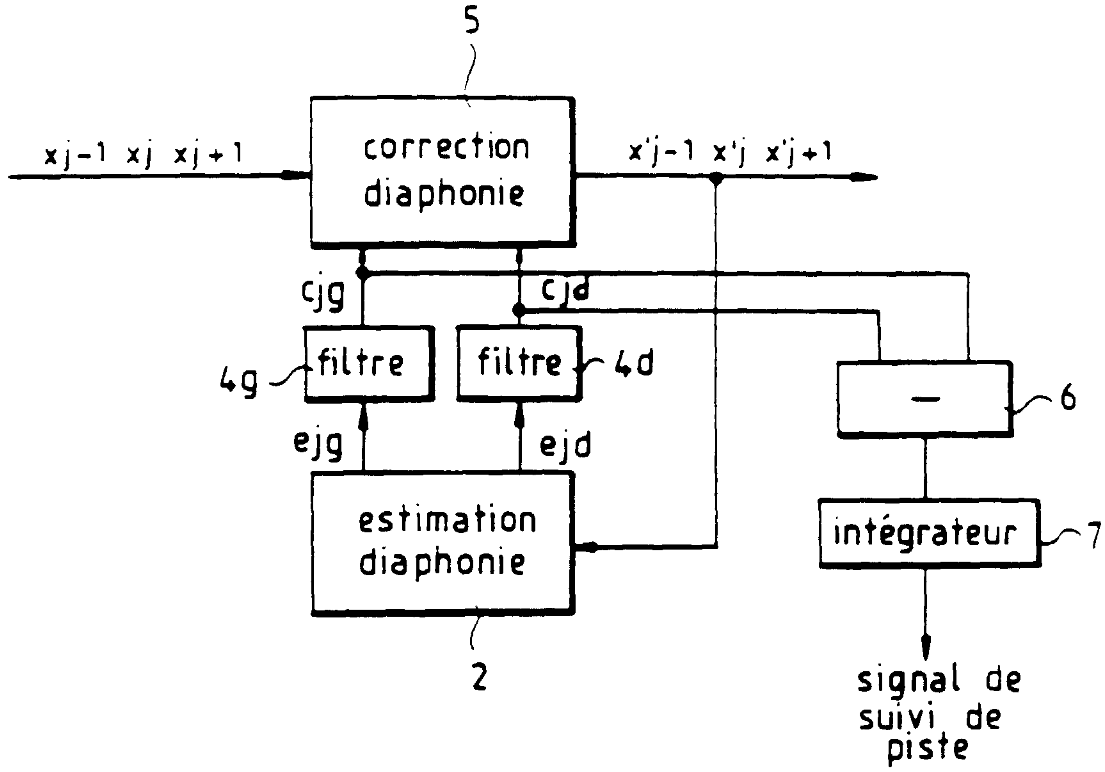
5
xj-1 xj xj+1
correction
diaphonie
x'j-1 x'j x'j+1
cjg
cjd
4g
filtre
filtre
4d
6
ejg
ejd
estimation
diaphonie
intégrateur
7
2
signal de
suivi de
piste

FIG.4a

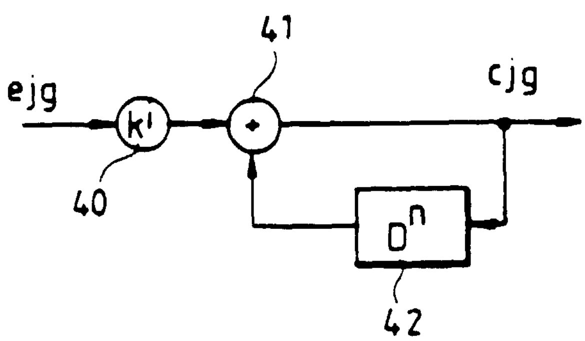
41
ejg
k'
cjg
40
D^n
42

FIG.4b

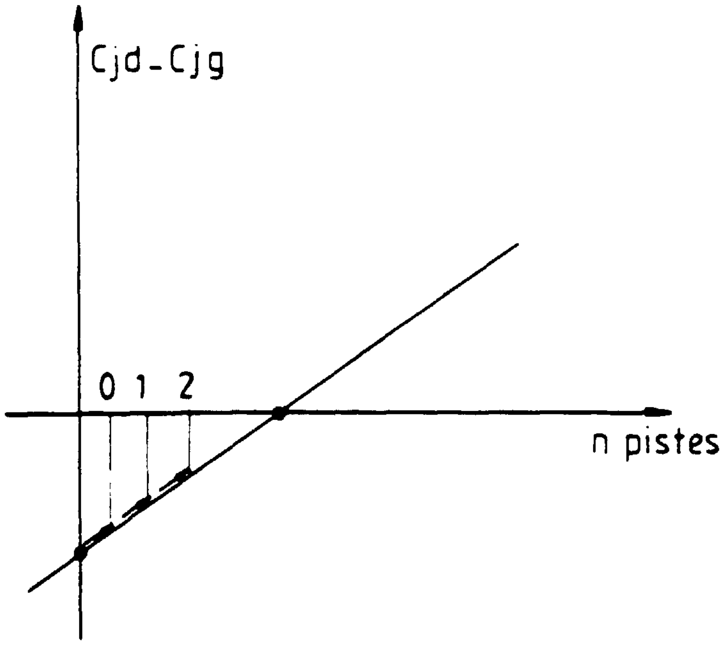


FIG.5

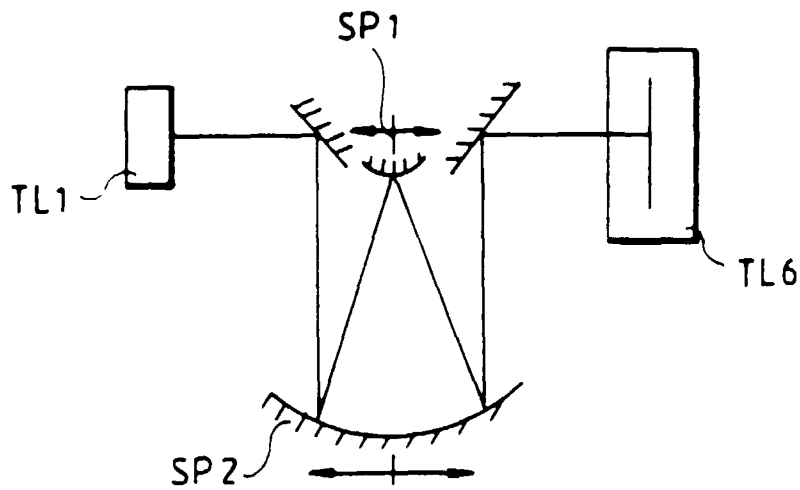


FIG.6